# EUROPEAN PATENT SPECIFICATION

(11) **EP 2 400 610 B1**
(45) Date of publication and mention of the grant of the patent: **30.08.2017**
(21) Application number: 11169666.2
(22) Date of filing: 13.06.2011
(51) Int. Cl.: H02B 1/052

(54) **Supporting bars and an electrical distribution module comprising said bars.**
Stützstangen und elektrisches Verteilungsmodul mit den Stangen
Barres support et module de distribution électrique comprenant lesdites barres

(30) Priority: 23.06.2010 IT MI20100216 U
(43) Date of publication of application: 28.12.2011
(73) Proprietor: ABB S.p.A., 20124 Milano (IT)
(72) Inventor: Tagliabue, Andrea, I-20831 Seregno (MI) (IT); Cagliani, Daniele, I-23847 Molteno (LC) (IT); Scola, Edoardo, I-23900 Lecco (LC) (IT); Benedetti, Pierceleste, I-22030 Orsenigo (CO) (IT)
(74) Representative: De Bortoli, Eros

(56) References cited:
- EP-A2- 2 355 275
- CH-A5- 583 400
- DE-U1-202007 002 232
- FR-A- 1 550 935

## Description

The present invention relates to supporting bars for supporting one or more electrical and/or electronic devices or components, and to an electrical distribution module comprising said bars.

Bars for supporting one or more electrical and/or electronic devices or components are widely used in electrical applications. In general, a row of openings is provided along the longitudinal length of the bars for receiving fixing means, and screws in particular, for attaching the bar to other devices or components. According to the current state of the art, although these supporting bars serve the functions and applications required of them, they still have several aspects susceptible to improvement, particularly as concerns their versatility in use.

In particular, these bars may be used alone or coupled with other components to form electrical distribution modules.

Electrical distribution modules are generally used in low-voltage electrical systems (i.e. for applications at operating voltages up to 1000V AC / 1500V DC) to distribute electricity from an electrical source to one or more loads. Well-known electrical switching devices are installed between the electrical source and the loads, e.g. circuit breakers, isolators, contactors, generally known as "switching devices" and hereinafter simply called "switches". The switches take effect by opening the contacts between their poles in response to currents beyond a given threshold due to anomalies in the electrical system, such as a short-circuit or an overload.

The known electrical distribution modules according to the current state of the art comprise a load-bearing structure defined by two cross-beams that transversely connect together two supporting bars of the above-described type. The cross-beams support one or more conductor bars that distribute the electricity from the electrical source to the switches. The switches and/or other types of electrical device are attached to the two supporting bars. In particular, fixing screws are passed through holes provided between the poles of the switches and then into corresponding openings provided on the supporting bar.

The electrical distribution modules according to the known state of the art are also susceptible to improvement concerning their versatility, stability and sturdiness, and the arrangement of the various elements comprising them.

The versatility of the electrical distribution modules in responding to the needs of the associated loads is strongly limited by the fact that the supporting bars used provide only one row of openings. This is usually a row of openings placed equidistant from one another, which only allows for switches of the same size to be installed on the bars, such that the through holes lie at a distance from one another that enables them to be aligned with the corresponding openings on the bars. Any variation in the size of the switches would determine a displacement of the row of through holes in relation to the row of openings on the bars, along both the longitudinal length and the transverse length of said bars.

In the known solutions, moreover, the positioning of the switches on the supporting bars is such that a portion of the switches installed on the bars is not included within the space defined by the load-bearing structure of the modules. This fact limits the global stability and sturdiness of the electrical distribution modules, which have to withstand high mechanical stresses due to the operation of the switches or to severe conditions of electrical failure.

Finally, the arrangement of the devices installed in the electrical distribution modules is generally not sufficiently neat and functional, and this has a negative impact on the ease of use and servicing of said modules.

DE202007002232 discloses a known example of supporting bar for electric or electronic devices. The object of the present invention is to provide supporting bars with improved characteristics in relation to the known art.

This object is achieved by a supporting bar, according to the following claim 1, which is designed to support one or more electrical and/or electronic devices or components, consisting of a profile extending longitudinally along a main axis that, seen in cross-section, comprises a central portion that transversely connects a first lateral portion and a second lateral portion, which are positioned opposite one another in relation to the central portion. The central portion comprises at least a first groove that is defined along at least a first portion of the longitudinal length of the bar, along its main axis, and it comprises a first opening lying transversely to the first and second lateral portions, and a first rear wall from which a first side wall and a second side wall extend transversely, facing one another. The first side wall and the second side wall have a space between them and are arranged so as to enable the bar to be attached to other devices or components by coupling with first fixing means that can be inserted in the first groove.

Another object of the present invention is to provide an electrical distribution module that enables the disadvantages identified in the known art to be overcome. This object is achieved by a load-bearing structure for an electrical distribution module for low-voltage systems, according to the following claim 7, which comprises at least a first supporting bar and a second supporting bar according to the present invention, arranged at a given distance from one another and connected transversely by at least a first cross-beam.

The object is also achieved by an electrical distribution module for low-voltage systems comprising said load-bearing structure and at least one conductor bar that is supported by the first cross-beam and arranged substantially parallel to the first and second supporting bars; said at least one conductor bar is for distributing electricity to at least one electrical device, operatively connected directly or indirectly to the electrical distribution module.

Further characteristics and advantages will emerge from the description of preferred, but not exclusive embodiments of the supporting bars and electrical distribution modules according to the present invention, as illustrated as non-limiting examples in the attached drawings, wherein:
- figure 1 shows a portion of a first embodiment of a supporting bar according to the present invention;
- figure 2 shows a portion of a second embodiment of a supporting bar according to the present invention;
- figure 3 shows the supporting bar in figure 1 when it is fixed with two accessories;
- figure 4 is a prospective view of the load-bearing structure for an electrical distribution module according to the present invention, with three conductor bars serving the module supported thereon;
- figures 5 and 6 are prospective views of two embodiments of a conductor bar suitable for use in an electrical distribution module according to the present invention;
- figure 7 shows an assembly step between three conductor bars, an isolating element and three conductor plates of an electrical distribution module according to the present invention;
- figure 8 is a front view of an electrical distribution module according to the present invention, on which a main switch is installed;
- figure 9 is a prospective view of an electrical distribution module according to the present invention, on which a main switch is installed, and in which four distribution switches are fitted;
- figure 10 shows a distribution switchboard with an electrical distribution module according to the present invention installed therein.

For the sake of simplicity, in the description that follows, the same numerical references are used to indicate the same or equivalent elements forming part of different embodiments of the supporting bars and electrical distribution modules according to the present utility model.

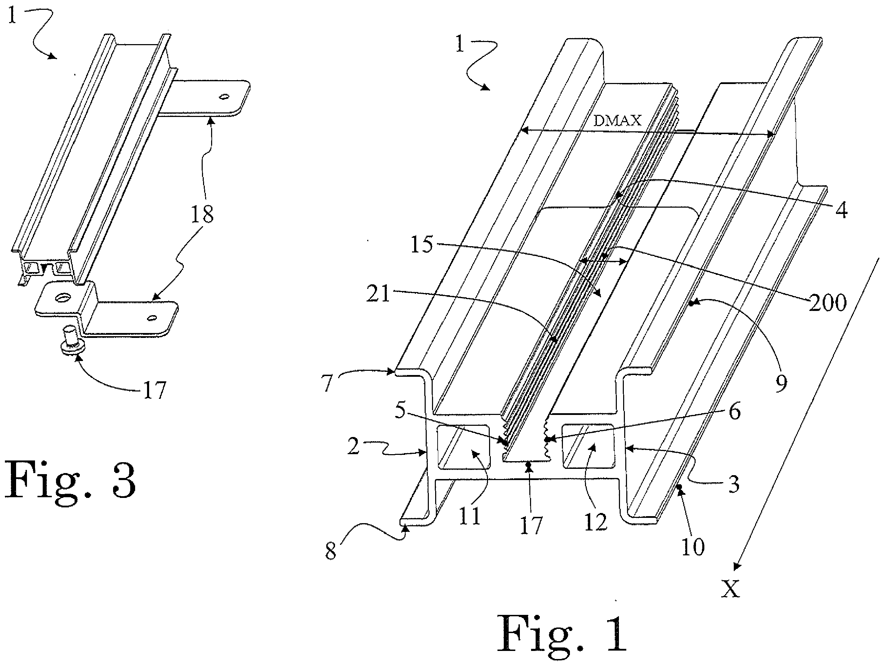

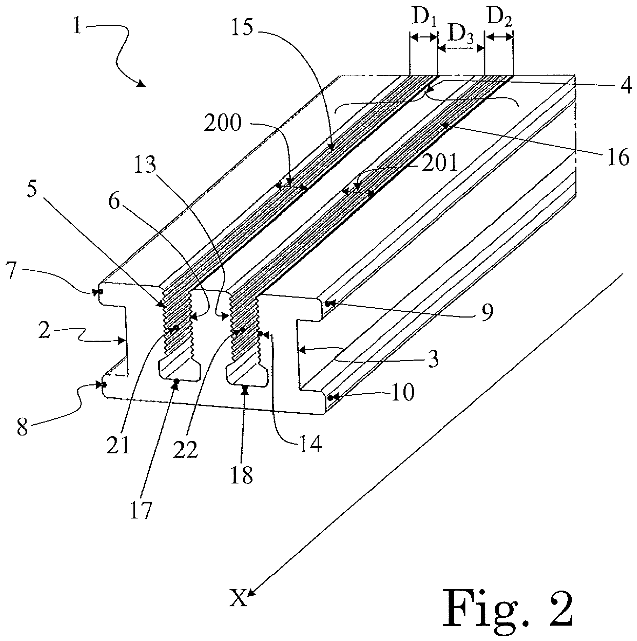

A supporting bar 1 according to the present invention (hereinafter indicated as the bar 1) is for supporting one or more electrical and/or electronic devices or components and has a profile that extends longitudinally along a main axis X (see figures 1 and 2). Seen in cross-section, the profile comprises a central portion 4 that transversely connects a first lateral portion 2 and a second lateral portion 3, which are positioned opposite one another on either side of the central portion 4. The central portion 4 comprises at least one first groove 15 defined along at least a first portion of the longitudinal length of the bar 1, along the main axis X; said first groove 15 comprises a first opening 200 lying transversely to the first and second lateral portions 2, 3 and a first rear wall 17, from which a first side wall 5 and a second side wall 6 extend transversely, facing one another. The side walls 5, 6 have a space between them and are arranged so as to enable the bar 1 to be fixed to other devices or components by coupling with first fixing means that can be inserted in the first groove.

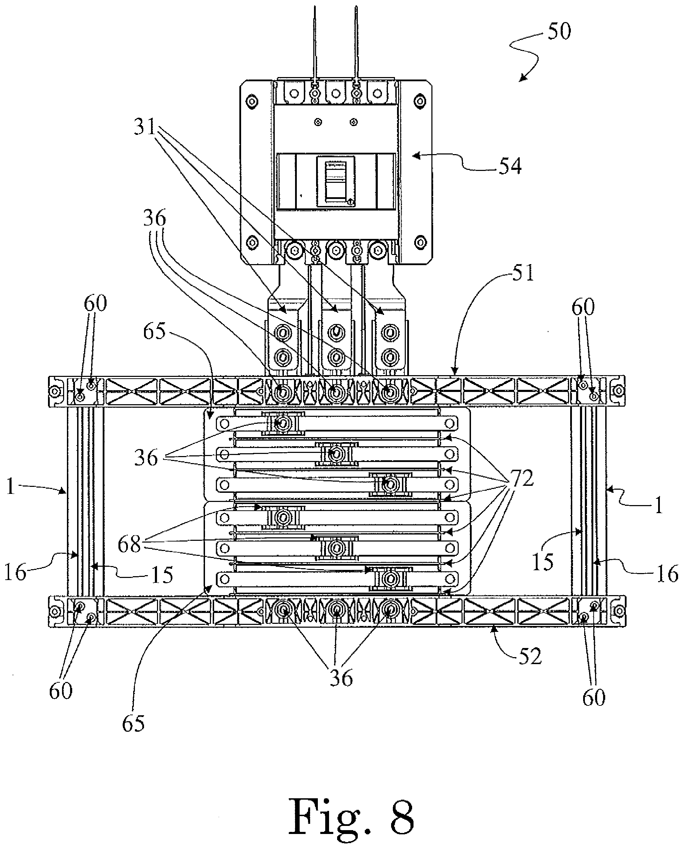

In particular, at least a portion of the first side wall 5 and of the second side wall 6 is knurled, so that it can be coupled with first fixing screws inserted in the first groove 15 (see, for instance, the screws 17 in figure 3, or the screws 60 in figure 8). Both the side walls 5, 6 are preferably knurled. The knurling on the first side wall 5 and on the second side wall 6 is defined by a plurality of furrows 21 extending parallel to one another along all or part of the first longitudinal portion of the bar 1.

As shown in the examples in figures 1 and 2, the first lateral portion 2 and the second lateral portion 3 preferably have a substantially "U" shape. In particular, the first lateral portion 2 comprises a portion connected to the central portion 4 plus a first edge 7 and a second edge 8 that extend transversely from opposite ends of the first portion.

The second lateral portion 3 also comprises a portion connected to the central portion 4, with a third edge 9 and a fourth edge 10 extending transversely from opposite ends of said second portion.

The edges 7, 8, 9, 10 may extend over part or all of the longitudinal length of the bar 1, along the main axis X.

The bars 1 are preferably made of aluminium; alternatively, they may be made of any other type of material suited to the purposes for which they are used.

Figure 1 shows a first embodiment of the bar 1, which has only the first groove 15 with the knurled side walls 5, 6. In the example shown, the side walls 5, 6 are equidistant from the first lateral portion 2 and from the second lateral portion 3, respectively; alternatively, their distance from the lateral portions 2, 3 could also be different.

The surfaces of the first edge 7 and second edge 8, and of the third edge 9 and fourth edge 10, constitute coupling surfaces for electrical and/or electronic devices. The maximum distance Dₘₐₓ (see figure 1) between the first edge 7 and the third edge 9, and between the second edge 8 and the fourth edge 10, is preferably such that it complies with one of the well-known DIN standards: the bar 1 thus forms a DIN rail on which modular electrical and/or electronic devices can be installed directly. In this case, the first side wall 5 and the second side wall 6 serve the purpose of enabling the bar 1 to be fixed to a supporting surface, preferably with the aid of accessories. For instance, figure 3 shows the bar 1 being fixed, by means of screws 17, to two accessories 18 arranged at each of its ends. The accessories 18 are for attaching the bar 1 to the framework of an electrical cabinet. Alternatively, other components may be fixed to the bar 1, for fixing the bar 1 in turn, to a wiring duct for instance, for the passage of the cables needed to serve the electrical devices installed thereon.

Two openings 11, 12 are advantageously provided in the central portion 4 of the bar 1 shown in figure 1, and they extend over the longitudinal length of the bar 1 between the first side wall 5 and the first lateral portion 2, and between the second side wall 6 and the second lateral portion 3, respectively. Thus, while an adequate sturdiness for the structure of the bar 1 is assured, a smaller quantity of material is used, with a consequent reduction in the manufacturing costs.

Figure 2 shows a second preferred embodiment of a bar 1, wherein the central portion 4 also comprises a second groove 16 defined on at least a second portion of the longitudinal length of the bar 1, along the main axis X.

This second groove 16 comprises a second opening 201 lying transversely to the first and second lateral portions 2, 3, and a second rear wall 18 from which a third side wall 13 and a fourth side wall 14 extend transversely, facing one another and substantially parallel to the first and second side walls 5, 6.

In particular, the third side wall 13 is arranged adjacent to the second side wall 6, along the transverse length of the bar 1, in relation to the main axis X. The third side wall 13 and the fourth side wall 14 have a space between them and are arranged so that they enable the bar to be fixed to other devices or components by coupling with second fixing means inserted in the second groove 16.

The first longitudinal portion of the bar 1 (along which the first groove 15 extends) may be of the same length or a different length from the second longitudinal portion (along which the second groove 16 extends).

In the example shown in figure 2, at least a portion of the third side wall 13 and of the fourth side wall 14 is knurled so that it can be coupled with second fixing screws. The knurling on the walls 13, 14 is defined by furrows 22 extending parallel to one another along all or part of the second longitudinal portion of the bar 1.

In the example shown in figure 2, the minimum distance D₁ between the first side wall 5 and the second side wall 6, and the minimum distance D₂ between the third side wall 13 and the fourth side wall 14 are the same; the shaping of the furrows 21 and 22 that respectively define the knurling on the first groove 15 and on the second groove 16 is also the same. The first fixing screws and the second fixing screws may thus consist of the same type of screw. Alternatively, the side walls 5, 6 may have a different space between them from that of the side walls 13, 14, and the shaping of the furrows 21 may differ from that of the furrows 22, in which case the first fixing screws and the second fixing screws to be used will differ from one another.

The portions of the side walls 5 and 6 coming between the knurled areas and the rear wall 17 are preferably separated from one another by a distance greater than D₁. Likewise, the portions of the side walls 13 and 14 coming between the knurled areas and the rear wall 18 are preferably separated from one another by a distance greater than D2.

It should be noted that the bars 1 illustrated in figures 1 and 2 are merely two examples coming within the scope of the present invention. In particular, the number of grooves for the insertion of fixing means, their position on the central portion 4 of the bar 1, and the shaping of the side walls (and the shaping of the knurling in particular) may differ from those illustrated. For instance, the bar 1 in figure 2 could have three grooves of the type described, with adjacent walls lying along the transverse length of the bar 1, in relation to the main axis X, separated from one another by the same distance or by different distances.

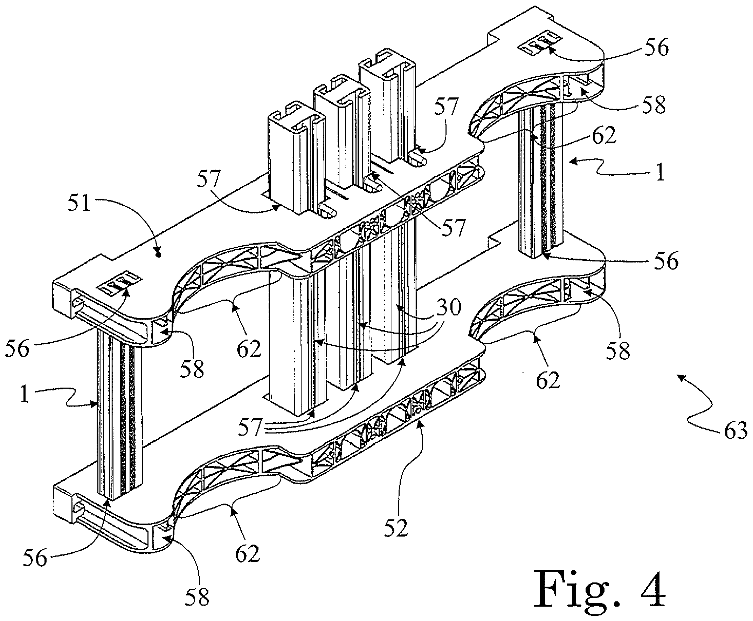

The present invention also relates to a load-bearing structure 63 (see figure 4, in particular) for an electrical distribution module, preferably for use in low-voltage systems, comprising at least a first supporting bar 1 and a second supporting bar 1 according to the present invention, arranged at a distance from one another and connected transversely by at least a first cross-beam 51.

The first cross-beam 51 is advantageously attached to the first and second supporting bars 1 with fixing means inserted in one of the grooves defined along the central portion 4 of the bars 1.

The load-bearing structure 63 preferably also comprises a second cross-beam 52 arranged at a distance from the first cross-beam 51, that transversely connects the first bar 1 and the second bar 1.

Figure 4 shows a preferred embodiment of the load-bearing structure 63 for an electrical distribution module, wherein the first cross-beam 51 and the second cross-beam 52, which are identical to one another, connect the opposite ends of the first bar 1 and second bar 1, which are of the type illustrated in figure 2.

In particular, the two cross-beams 51, 52 are preferably made of an insulating material and their thickness consists of an internal mesh structure that enables the manufacture of cross-beams 51, 52 that are lightweight and economical, while their adequate stiffness is guaranteed. The ends and the central portion of the two cross-beams 51, 52 are advantageously joined by two portions 62 with a curvature that is recessed with respect to the concavity in line with the first bar 1 and the second bar 1.

At the opposite ends of the first cross-beam 51 and of the second cross-beam 52, there are openings 56 arranged so that they are facing one another in the load-bearing structure 63; these openings 56 are designed so that the first bar 1 and the second bar 1 can pass through them.

The first cross-beam 51 and the second cross-beam 52 are attached to the first bar 1 and to the second bar 1 by means of two screws 60 inserted through holes 58 in the two cross-beam 51, 52 in order to be coupled respectively with the first and second side walls 5, 6 of the first groove 15, and with the third and fourth side walls 13, 14 of the second groove 16 (see figure 8, in particular).

The present invention also relates to an electrical distribution module, and preferably to an electrical distribution module 50 for low-voltage systems (hereinafter indicated as the module 50), comprising a load-bearing structure 63 according to the present invention and one or more conductor bars 30 (hereinafter indicated as the bars 30), which are supported by the first cross-beam 51 of the load-bearing structure 63 and arranged substantially parallel to the first bar 1 and to the second bar 1. The bars 30 are for distributing electricity to at least one electrical device operatively connected directly or indirectly to the module 50.

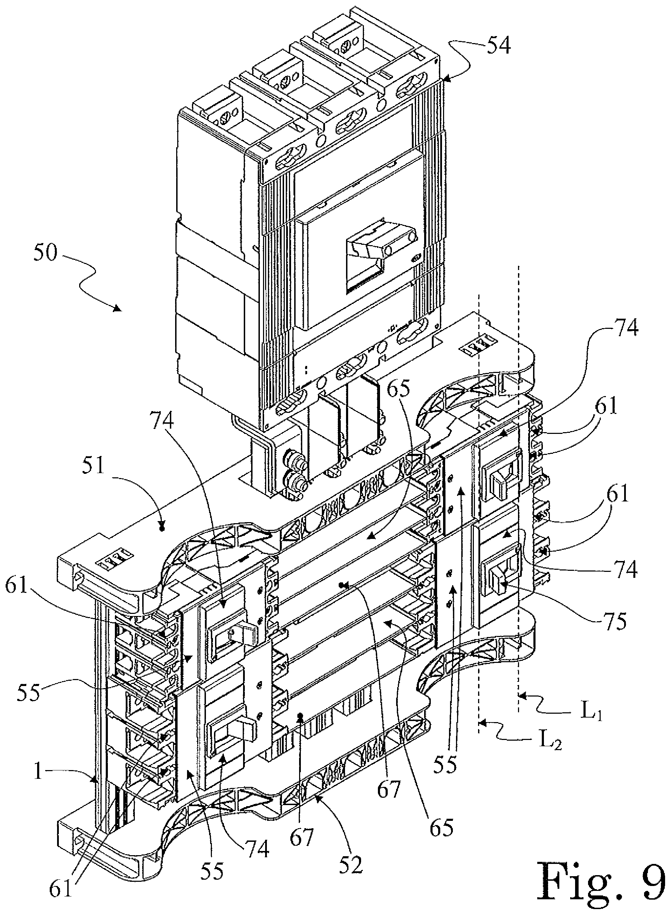

The bars 30 are preferably connected to an electrical source in the electrical system by means of a main switch 54, which constitutes the input for the electricity in the module 50. Each of the poles of the main switch 54 is electrically connected to a corresponding bar 30 by means of conductor plates 31 (if the switch 54 is installed in the module 50, as shown in figures 8 and 9) or by means of electrical cables (if the main switch 53 is located in a position remote from the module 50).

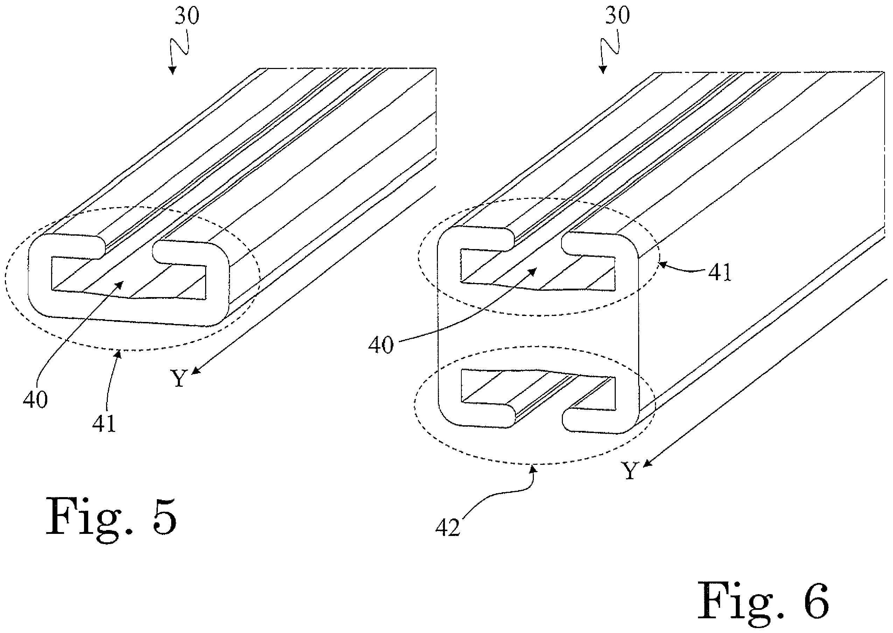

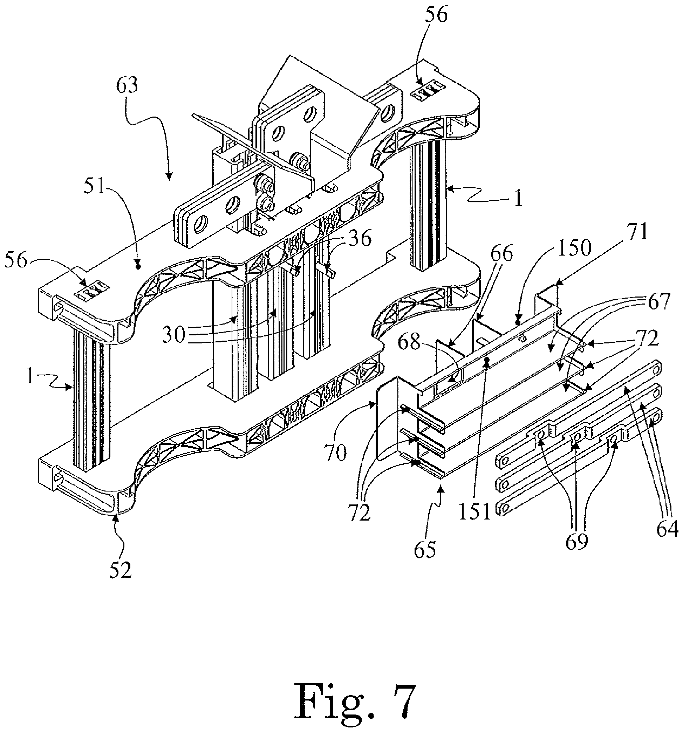

To give an example, figures 5 and 6 show two different embodiments of a bar 30 (preferably made of copper) with a profile extending longitudinally along the main axis Y as shown in figures. Seen in cross-section, the profile comprises at least a first side 41 with a substantially "C" shape defining a groove 40 for receiving third fixing means for use both in fixing the bar the 30 to the first cross-beam 51, and to fix it to the electrical connectors of the various electrical
devices associated with the module 50. The groove 40 is preferably for coupling with screws 36 that have a first portion with ends that abut against the two opposite surfaces of the groove 40, and a second portion, transverse to the first, that extends beyond the groove 40 towards the outside of the bar 30 (see figure 7).

Seen in cross-section, the profile of the bar 30 in figure 6 also comprises a second side 42 opposite to the first side 41 and with the same shape as the latter. This solution enables an improved dissipation of the heat generated in the bar 30.

Alternatively to the bars 30 illustrated, any type of known bar 30 suitable for the above-described purposes may be used.

Figures 8 and 9 show a preferred embodiment of the module 50, with a load-bearing structure 63 of the type shown in figure 4.

There are three pairs of openings 57 facing one another on the first cross-beam 51 and on the second cross-beam 52 (see figure 4); and a bar 57 passes through each pair of openings 57. The three bars 30 are fixed to the cross-beams 51, 52 with the aid of screws 36. The number of bars 30 contained in a module 50 may differ from the one illustrated, and generally corresponds to the number of electrical phases in the main switch 54 (or to the number of phases plus the neutral, if any).

The transverse length of the load-bearing structure 63 (defined substantially by the longitudinal length of the bars 1) may be extended by inserting further cross-beams between the two cross-beams connecting the ends of the first bar 1 and the second bar 1.

For instance, the load-bearing structure 63 could comprise a third cross-beam positioned between the first cross-beam 51 and the second cross-beam 52, with openings defined therein for the passage of the first bar 1, the second bar 1 and the bars 30. In this case, the first bar 1 and the second bar 1 may consist of a single piece extending from the first cross-beam 51 to the second cross-beam 52, or they may consist of two pieces coupled together, extending respectively from the third cross-beam to the first cross-beam 51 and to the second cross-beam 52.

Any increase in the transverse length of the module 50 is limited by the need for sturdiness of the load-bearing structure 63 and by the longitudinal length of the bars 30, which must comply with the electrical dimensioning constraints of the module 50.

Among the electrical devices operatively connected to the distribution module 50, there is at least one distribution switch 55 (hereinafter indicated as the switch 55 and shown in figure 9) associated with a load in the electrical system in which the module 50 is installed. The poles of the switches 55 are electrically connected to the bars 30 by means of electrical connectors, such as conductor plates or electrical cables. In addition to the switches 55, accessory electrical devices of various type and functionality, such as alarms or signal devices, may also be connected to the module 50.

The switches 55 and/or other types of electrical device contained in the module 50 are advantageously attached directly to the first bar 1 or to the second bar 1 by inserting fixing means in corresponding grooves defined on the central portion 4 of the bars 1. In particular, in a preferred embodiment the module 50, illustrated in figures 8 and 9, it comprises a first bar 1 and a second bar 1 of the type shown in figure 2.

The switches 55 can thus be attached to the first bar 1 or to the second bar 1 by coupling the first fixing means with the first and second side walls 5, 6 of the first groove 15, or by coupling second fixing means with the third and fourth side walls 13, 14 of the second groove 16.

Figure 9 shows a module 50 with four three-pole switches 55 of the so-called moulded case circuit breaker (MCCB) type fixed to the first bar 1 or to the second bar 1. In the example shown, the first and the second fixing means comprise screws 61 inserted in three holes provided between the poles of the switches 55, transversely to the first and second bars 1. The screws 61 are inserted through the holes to become coupled with the knurled portions of the first groove 15 and of the second groove 16.

The number of switches 55, and their arrangement on the two bars 1, may differ from the one shown.

Again with reference to the example illustrated, a first switch 55 and a second switch 55 of different sizes are fixed to each of the two bars 1; the first switch 55 is fixed by coupling the screws 61 with the knurled portions of the first groove 15. The maximum distance D₃ (see figure 2) between the second side wall 6 of the first groove 15 and the third side wall 13 of the second groove 16 is such that the second switch 55 can be fixed to the corresponding bar 1 by coupling the screws 61 with the knurled portions of the second groove 16.

The switches 55 comprise a front cover 74 opposite the first bar 1, and the second bar 1, from which levers 75 for operating the switches 55, for instance, may extend. In particular, the two switches 55 of different size are fixed to the first bar 1 and to the second bar 1 so that two opposite edges of their front covers 74 are substantially aligned with one another along lines L₁ and L₂ shown in figure 9.

The module 50 preferably comprises at least one isolating element 65 with a central body having a first face 150 and a second, opposite face 151 (see figure 7). The first face 150 is attached to at least a first bar 30 and a second bar 30 of the module 50, while at least a first electrical connector 64 and a second electrical connector 64 are installed on the second face 151 in order to connect the first bar 30 and the second bar 30 to first and second poles, respectively, of one of the switches 55.

The isolating element 65 comprises at least a first fin 66 extending transversely from the first face 150 so as to become inserted in the space between the first bar 30 and the second bar 30, and at least a second fin 67 extending transversely from the second face 151 so as to become inserted in the space between the first electrical connector 64 and the second electrical connector 64.

In addition, at least a first window 68 and a second window 68 are defined in the central body of the isolating element 65 on opposite sides of the second fin 67 and facing towards the first bar 30 and the second bar 30, respectively. These windows 68 are defined so that third fixing means 36 pass through them to fix the first electrical connector 64 and the second electrical connector 64 to the first bar 30 and to the second bar 30, respectively.

In the examples illustrated, each pole of the switches 55 is electrically connected to one of the bars 30 by means of a conductor plate 64 (preferably made of copper). In particular, the conductor plate 64 has a first end and a second, opposite end for connecting to the poles of the switches 55 fixed to the first bar 1 and to the second bar 1, respectively.

Figure 7 shows an isolating element 65 being assembled with three bars 30 and three conductor plate 64. The isolating element 65 comprises two fins 66 that separate and electrically isolate the bars 30 from one another, and three fins 67, lying substantially transversally to the first fins 66. Two adjacent fins 67 separate and electrically isolate the conductor plates 64. A screw 36 is inserted in each of the bars 30, with its second portion extending beyond the bars 30 in order to pass through a corresponding window 68 (see figure 8, in particular). The conductor plates 64 likewise have a portion 69 between their ends that folds over so that it can become inserted in the window 68 to be coupled with a corresponding screw 36.

Figure 9 shows a first isolating element 65 and a second isolating element 65 installed on bars 30 adjacent to one another and also adjacent respectively to the first cross-beam 51 and to the second cross-beam 52. In particular, the fin 67 of the first isolating element 65 facing the second isolating element 65 separates and isolates the conductor plates 64 associated with two mutually adjacent switches 55 on the first bar 1, and with another two mutually adjacent switches 55 on the second bar 1.

In addition to electrically isolating from one another the various electrical connectors 64 associated with the same switch 55, or with different switches 55, the isolating elements 65 constitute an isolating barrier to prevent users of the module 50 from coming into contact with the bars 30, during servicing activities for instance.

A first end of the switches 55 contained in the module 50 is preferably attached to the first bar 1 or to the second bar 1, while their second end, opposite the first end, faces towards the conductor bars 30 and is operatively coupled with the load-bearing structure 63, and particularly with the first cross-beam 51, and with the second cross-beam 52.

In particular, the isolating element 65 comprises means for coupling it with a first switch 55 and a second switch 55 respectively fixed to the first bar 1 and to the second bar 1, and facing said element 65. In particular, a first supporting surface 70 and a second supporting surface 71 extend transversely from the isolating element 65 towards the first bar 1 and the second bar 1, respectively, and are for supporting the second ends of the first switch 55 and of the second switch 55, respectively. The switches 55 are therefore operatively connected to the first cross-beam 51 and to the second cross-beam 52 by means of the isolating element 65 and the bars 30.

Extending from the ends of the isolating element 65 facing towards the first bar 1 and towards the second bar 1, there are also partitions 72 (see figures 7 and 8), each of which is aligned with a fin 67, so that they can become inserted in a guide 73 provided in the second end of the switches 55 (see figure 9), between the electrical input terminals of the poles. The presence of these partitions 72 facilitates the installation of the switches 55 in the module 50 and improves the global isolation of the phases of the switches 55.

Alternatively to the embodiments illustrated in the figures, a load-bearing structure 63 and a related module 50 according to the present invention may comprise a first bar 1 and a second bar 1 of the type shown in figure 1. In this case, modular switches of the moulded-case type, or MCCB, and/or other electrical devices are installed directly on the DIN rails defined by the two bars 1. Fixing means are inserted in the first groove 15 to attach the bar 1 to the cross-beams of the load-bearing structure 63. The other elements described for the load-bearing structure 63 and the related module 50, as shown in the figures, can be used according the same methods in this further embodiment too.

The module 50 is preferably installed in distribution switchboards 200 (which may comprise one or more modules 50), or it may also be used in stand-alone configurations, wherein it is positioned in suitably-protected environments using the first cross-beam 51 as a supporting surface.

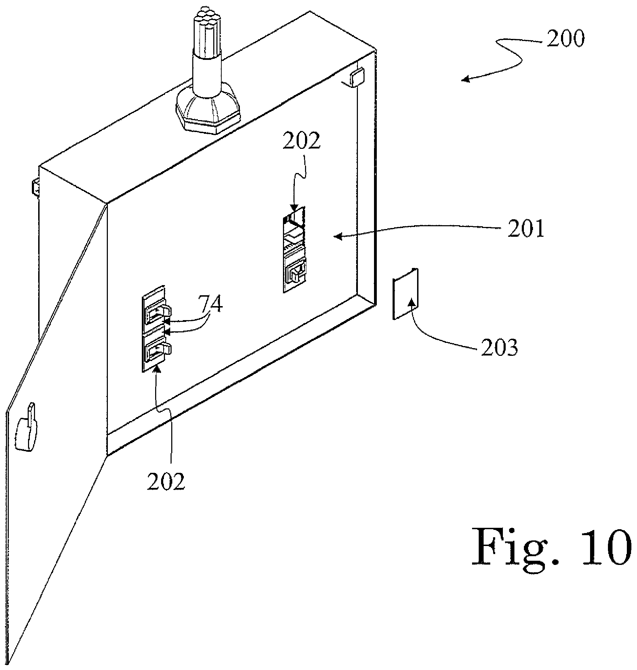

Figure 10 shows a distribution switchboard 200 comprising a module 50 that is fixed to an internal surface of said switchboard 200. On the front panel 201 of the distribution switchboard 200 there may be one or more windows 202 defined so that the front cover 74 of the switches 55, which are aligned with one another, can path through said windows. If the main switch 54 is installed on the module 50, a further window may be defined on the front panel 201 so as to provide access to the front cover of said switch 54.

One or more isolating elements 203 may be inserted in the portion of the windows 202 not occupied by the front cover 54 of a switch 55.

The presence of the curved portions 62 in the two cross-beams 51, 52 makes it easy for a user of the distribution switchboard 200 to access the switches 55.

It has been demonstrated in practical applications that the bar 1 and the distribution module according to the present invention fully satisfy the previously established objects, offering a number of advantages over the known state of the art.

The bars 1 are more versatile in use than those of the known art. For instance, the position of the accessory components 18 in figure 3 can be adjusted along the whole longitudinal length of the bar 1, making it easy to adapt to the framework of an electrical cabinet on which the bar 1 is to be installed.

The modules 50, moreover, are particularly versatile inasmuch as concerns the installation therein of electrical devices, and particularly switches. In the first place, in passing from a first switch 55 to a second switch 55 of different sizes, the effect of the dimensional difference between the switches 55 along the transverse length of the bar 1 is cancelled by the presence of the two grooves 15, 16. The maximum distance D₃ (see figure 2) between the adjacent side walls 6, 13 of the first groove 15 and of the second groove 16 is designed to take such a dimensional variability into account. It is important to emphasise that more than two types of different-sized switch 55 can be fixed to the bars 1 simply by defining more than two grooves on each of said bars 1, suitably separated from one another to allow for the dimensional differences between the various types of switch.

Secondly, the effect of differences in the distance between the through holes of the first switch 55 and those of the second switch 55 is cancelled by the fact that the grooves 15, 16 extend continuously over the longitudinal length of the bar 1.

In addition, the fact that the switches 55 have their two opposite ends operatively coupled to a bar 1 and to the cross-beams 51, 52, respectively, makes the switches 55 become structural elements of the load-bearing structure 63 of the module 50. Using this solution, the load-bearing structure 63 is better able to withstand the mechanical stresses, and particularly the vibrations that propagate along the bars 1 as a result of the operation of the switches 55.

Finally, as shown in figure 9, the switches 55 are placed in the module 50 aligned neatly and functionally with one another. In particular, the switches 55 are entirely contained within the space between the first cross-beam 51 and the second cross-beam 52, thereby increasing the compact nature of the module 50. In addition, the front covers 74 are aligned with one another so that they are readily accessible inside a distribution switchboard 200 by means of a suitable window.

The supporting bars and the electrical distribution modules thus conceived may be susceptible to numerous modifications and variants, all coming within the scope of the present invention. For instance, all the components may be replaced by other, technically equivalent parts. In practice, the types of material used in the context of the above-described intended application, like the dimensions, may be any, according to need and the state of the art.

## Claims

1. A supporting bar (1) for supporting one or more electrical and/or electronic devices or components, comprising a profile extending longitudinally along a main axis (X) that, seen in cross-section, comprises a central portion (4) transversely connecting a first lateral portion (2) and a second lateral portion (3) positioned opposite one another on either side of the central portion (4), said central portion (4) comprising at least a first groove (15) extending over at least a first portion of the longitudinal length of the bar (1), along said first main axis (X), said first groove (15) comprising a first opening (200) lying transversely to the first and second lateral portions (2, 3), and a first rear wall (17), from which a first side wall (5) and a second side wall (6) extend transversely, facing one another, said first and second side walls (5, 6) being separated and arranged so as to enable the bar (1) to be fixed to further devices or components by coupling with first fixing means (17, 60, 61) for inserting in said first groove, **characterised in that**:
- said first lateral portion (2) comprises a first portion connected to the central portion (4), plus a first edge (7) and a second edge (8) that extend transversely from opposite ends of said first portion;
- said second lateral portion (3) comprises a second portion connected to the central portion (4), with a third edge (9) and a fourth edge (10) extending transversely from opposite ends of said second portion;
said first, second, third and fourth edges (7, 8, 9, 10) extending over at least a portion of the longitudinal length of the bar (1), along the main axis (X) and having coupling surfaces for electrical and/or electronic devices.

2. A bar (1) according to claim 1, **characterised in that** at least a portion of said first and second side walls (5, 6) is knurled.

3. A bar (1) according to claim 1, **characterised in that** said central portion (4) also comprises a second groove (16) extending over at least a second portion of the longitudinal length of the bar (1), along the main axis (X), said second groove (16) comprising a second opening (201) lying transversely to the first and second lateral portions (2, 3), and a second rear wall (18) from which a third side wall (13) and a fourth side wall (14) extend transversely, facing one another, wherein said third and fourth side walls (13, 14) are substantially parallel to the first and second side walls (5, 6), and said third side wall (13) is adjacent to said second side wall (6) along the transverse length of the bar (1) in relation to the main axis (X), said third and fourth side walls (13, 14) being separated and arranged so as to allow for the bar to be fixed to further devices or components by coupling with second fixing means (61) that can be inserted in the second groove (16).

4. A load-bearing structure (63) for an electrical distribution module (50) for low-voltage systems, **characterised in that** it comprises at least a first supporting bar (1) and a second supporting bar (1) according to one or more of the previous claims, and arranged at a distance from one another, connected transversely by at least a first cross-beam (51).

5. A load-bearing structure (63) according to claim 4, **characterised in that** said first cross-beam (51) is fixed to said first and second supporting bars (1) by inserting first fixing means (60) in said first groove (15) of the first and second supporting bars (1).

6. A load-bearing structure (63) according to claim 4, **characterised in that** it comprises a second cross-beam (52) positioned at a distance from the first cross-beam (51), said second cross-beam (52) transversely connecting said first and second supporting bars (1).

7. An electrical distribution module (50) for low-voltage systems, **characterised in that** it comprises a load-bearing structure (63) according to claim 4 and at least one conductor bar (30) supported by the first cross-beam (51), and arranged substantially parallel to the first and second supporting bars (1), said at least one conductor bar (30) being for distributing electricity to at least one electrical device operatively connected, directly or indirectly, to said electrical distribution module (50).

8. A module (50) according to claim 7, **characterised in that** said at least one electrical device is fixed directly to said first supporting bar (1) by coupling the first fixing means (61) with the first side wall (5) and the second side wall (6) of the first groove (15).

9. A module according to claim 8, **characterised in that** said at least one electrical device comprises at least a first switching device (55) with one or more poles electrically connected to said at least one conductor bar (30).

10. A module according to claim 9, **characterised in that** said switching device (55) is a moulded-case circuit breaker.

11. A module according to claim 9, **characterised in that** a first end of the first switching device (55) is fixed to said first supporting bar (1), and the second end, opposite the first, faces towards said at least one conductor bar (30) and is operatively coupled to said load-bearing structure (63).

12. A module according to claim 11, **characterised in that** it comprises at least a second switching device (55) with one or more poles electrically connected to said at least one conductor bar (30), and of a different size from said at least one first switching device (55), the distance (D₃) between said second and third side walls (6, 13) of the first and second grooves (15, 16) being such that said second switching device (55) is fixed to the first supporting bar (1) by coupling the second fixing means (61) with said third and fourth side walls (13, 14) of the second groove (16).

13. A module (50) according to claim 9, **characterised in that** it comprises at least one isolating element (65) comprising:
- a central body with a first face (150) and a second face (151) opposite one another, said first face (150) being attached to at least one first conductor bar (30) and one second conductor bar (30), and at least one first electrical connector (64) and one second electrical connector (64) being attached to the second face(151);
- at least one first fin (66) extending transversely from the first face (150) so that it can become inserted in the space between said first and second conductor bars (30);
- at least one second flap (67) extending transversely from the second face (151) so that it can become inserted in the space between said first and second electrical connectors (64);
- at least one first window (68) and one second window (68) defined on the central body on opposite sides of said second fin (67), and facing said first and second conductor bars (30), respectively;
said first and second electrical connectors (64) being for connecting a first pole and a second pole of the first switching device (55) to said first and second conductor bars (30), respectively;
said first and second windows (68) being defined so that third fixing means (36) can pass through them, to fix said first and second electrical connectors (64) to said first and second conductor bars (30), respectively.

14. A distribution switchboard (200) for low-voltage systems, **characterised in that** it comprises at least one distribution module (50) according to claim 7.

## Patentansprüche

1. Trägerstange (1) zum Tragen einer oder mehrerer elektrischer und/oder elektronischer Einrichtungen oder Komponenten, umfassend ein Profil, das sich longitudinal entlang einer Hauptachse (X) erstreckt, das, im Querschnitt gesehen, einen zentralen Abschnitt (4) umfasst, der transversal einen ersten lateralen Abschnitt (2) und einen zweiten lateralen Abschnitt (3), die einander auf beiden Seiten des zentralen Abschnitts (4) gegenüberliegend angeordnet sind, verbindet, wobei der zentrale Abschnitt (4) mindestens eine erste Nut (15) umfasst, die sich über mindestens einen ersten Abschnitt der longitudinalen Länge des Trägers (1) erstreckt, entlang der ersten Hauptachse (X), wobei die erste Nut (15) eine erste Öffnung (200) umfasst, die transversal zu den ersten und zweiten lateralen Abschnitten (2, 3) liegt und eine erste Rückwand (17), von der eine erste Seitenwand (5) und eine zweite Seitenwand (6) sich transversal erstrecken, einander gegenüberliegend, wobei die ersten und die zweiten Seitenwände (5, 6) getrennt sind und angeordnet, so dass sie dem Träger (1) ermöglichen, an weiteren Einrichtungen oder Komponenten fixiert zu werden mittels Kopplung mit ersten Fixierungsmitteln (17, 60, 61) zum Einfügen in die erste Nut, **dadurch gekennzeichnet, dass**
- der erste laterale Abschnitt (2) einen ersten Abschnitt umfasst, der mit dem zentralen Abschnitt (4) verbunden ist, und eine erste Kante (7) und eine zweite Kante (8), die sich transversal von gegenüberliegenden Enden des ersten Abschnitts erstrecken;
- der zweite laterale Abschnitt (3) einen zweiten Abschnitt umfasst, der mit dem zentralen Abschnitt (4) verbunden ist, mit einer dritten Kante (9) und einer vierten Kante (10), die sich transversal von gegenüberliegenden Enden des zweiten Abschnitts erstrecken;
die ersten, zweiten, dritten und vierten Kanten (7, 8 ,9, 10) erstrecken sich über mindestens einen Abschnitt der longitudinalen Länge des Trägers (1), entlang der Hauptachse (X) und haben Kopplungsflächen für elektrische und/oder elektronische Einrichtungen.

2. Träger (1) nach Anspruch 1, **dadurch gekennzeichnet, dass** mindestens ein Abschnitt der ersten und zweiten Seitenwände (5, 6) gerändelt ist.

3. Träger (1) nach Anspruch 1, **dadurch gekennzeichnet, dass** der zentrale Abschnitt (4) ebenso eine zweite Nut (16) umfasst, die sich über mindestens einen zweiten Abschnitt der longitudinalen Länge des Trägers (1) erstreckt, entlang der Hauptachse (X), wobei die zweite Nut (16) eine zweite Öffnung (201) umfasst, die transversal zu den ersten und zweiten lateralen Abschnitten (2, 3) liegt, und eine zweite Rückwand (18) von der eine dritte Seitenwand (13) und eine vierte Seitenwand (14) sich transversal erstrecken, einander gegenüberliegend, wobei die dritte und vierte Seitenwand (13, 14) im Wesentlichen parallel zu den ersten und zweiten Seitenwänden (5, 6) sind, und die dritte Seitenwand (13) benachbart der zweiten Seitenwand (6) ist entlang der transversalen Länge des Trägers (1) in Bezug auf die Hauptachse (X), wobei die dritte und vierte Seitenwand (13, 14) getrennt sind und angeordnet, so dass sie es erlauben, dass auf dem Träger weitere Einrichtungen oder Komponenten mittels Kopplung mit zweiten Fixierungsmitteln (61) fixiert werden, die in die zweite Nut (16) eingefügt werden.

4. Lasttragende Struktur (63) für ein elektrisches Verteilermodul (50) für Niederspannungssysteme, **dadurch gekennzeichnet, dass** es mindestens eine erste Trägerstange (1) und eine zweite Trägerstange (1) nach einem oder mehreren der vorhergehenden Ansprüche umfasst, und angeordnet in einem Abstand voneinander, transversal verbunden mittels mindestens einem Querträger (51).

5. Lasttragende Struktur (63) nach Anspruch 4, **dadurch gekennzeichnet, dass** der erste Querträger (51) an der ersten und zweiten Trägerstange (1) mittels Einfügen erster Fixierungsmittel (60) in die erste Nut (15) der ersten und zweiten Trägerstange (1) fixiert ist.

6. Lasttragende Struktur (63) nach Anspruch 4, **dadurch gekennzeichnet, dass** sie einen zweiten Querträger (52) angeordnet in einem Abstand von dem ersten Querträger (51) umfasst, wobei der zweite Querträger (52) transversal die ersten und zweiten Trägerstangen (1) verbindet.

7. Elektrisches Verteilermodul (50) für Niedrigspannungssysteme, **dadurch gekennzeichnet, dass** es eine lasttragende Struktur (63) nach Anspruch 4 umfasst und mindestens eine Leiterstange (30), die durch den ersten Querträger (51) getragen ist, und im Wesentlich parallel zu den ersten und zweiten Trägerstangen (1) angeordnet ist, wobei die mindestens eine Leiterstange (30) zur Verteilung von Elektrizität an mindestens eine elektrische Einrichtung operativ, direkt oder indirekt, mit dem elektrischen Verteilermodul (50) verbunden ist.

8. Modul (50) nach Anspruch 7, **dadurch gekennzeichnet, dass** mindestens eine elektrische Einrichtung direkt an der ersten Trägerstange (1) fixiert ist mittels Kopplung der ersten Kopplungsmittel (61) mit der ersten Seitenwand (5) und der zweiten Seitenwand (6) der ersten Nut (15).

9. Modul nach Anspruch 8, **dadurch gekennzeichnet, dass** mindestens eine elektrische Einrichtung mindestens eine erste Schaltereinrichtung (55) mit einem oder mehreren Polen umfasst, die elektrisch mit der mindestens einen Leiterstange (30) verbunden ist.

10. Modul nach Anspruch 9, **dadurch gekennzeichnet, dass** die Schaltereinrichtung (55) ein Leistungsschalter mit geformtem Gehäuse ist.

11. Modul nach Anspruch 9, **dadurch gekennzeichnet, dass** ein erstes Ende der ersten Schaltereinrichtung (55) an der ersten Trägerstange (1) fixiert ist, und das zweite Ende, gegenüberliegend dem ersten, der mindestens einen Leiterstange (30) gegenüber liegt und operativ mit der lasttragenden Struktur (63) gekoppelt ist.

12. Modul nach Anspruch 11, **dadurch gekennzeichnet, dass** es mindestens eine zweite Schaltereinrichtung (55) mit einem oder mehreren Polen umfasst, die elektrisch mit der mindestens einen Leiterstange (30) verbunden ist, und von einer unterschiedlichen Größe in Bezug auf die mindestens eine erste Schaltereinrichtung (55) ist, wobei die Entfernung (D₃) zwischen der zweiten und dritten Seitenwand (6, 13) der ersten und zweiten Nut (15, 16) so ist, dass die zweite Schaltereinrichtung (55) an der ersten Trägerstange (1) fixiert ist mittels Kopplung der zweiten Fixierungsmittel (61) mit der dritten und vierten Seitenwand (13, 14) der zweiten Nut (16).

13. Modul (50) nach Anspruch 9, **dadurch gekennzeichnet, dass** es mindestens ein Isolierungselement (65) umfasst, das umfasst:
- einen zentralen Körper mit einer ersten Seite (150) und einer zweiten Seite (151) einander gegenüberliegend, wobei die erste Seite (150) an mindestens einer ersten Leiterstange (30) und einer zweiten Leiterstange (30) angebracht ist, und mindestens einen ersten elektrischen Verbinder (64) und einen zweiten elektrischen Verbinder (64), die an der zweiten Seite (151) angebracht sind;
- mindestens eine erste Finne (66), die sich transversal von der ersten Seite (150) erstreckt, so dass sie in den Raum zwischen der ersten und der zweiten Leiterstange (30) eingefügt werden kann;
- mindestens eine zweite Lasche (67), die sich transversal von der zweiten Fläche (151) erstreckt, so dass sie in den Raum zwischen dem ersten und dem zweiten elektrischen Verbinder (64) eingefügt werden kann;
- mindestens ein erstes Fenster (68) und ein zweites Fenster (68) definiert auf dem zentralen Körper auf gegenüberliegenden Seiten der zweiten Finne (67), und entsprechend der ersten und zweiten Leitungsstange (30) gegenüberliegenden;
wobei die ersten und zweiten elektrischen Verbinder (64) zum Verbinden eines ersten Pols und eines zweiten Pols der ersten Schaltereinrichtung (55) entsprechend mit den ersten und zweiten Leiterstangen (30) sind;
wobei die ersten und zweiten Fenster (68) so definiert sind, dass dritte Fixierungsmittel (36) zwischen ihnen passieren können, um entsprechend die ersten und zweiten elektrischen Verbinder (64) mit den ersten und zweiten Leiterstangen (30) zu verbinden.

14. Verteilerschaltanlage (200) für Niedrigspannungssysteme, **dadurch gekennzeichnet, dass** sie mindestens ein Verteilermodul (50) nach Anspruch 7 umfasst.

## Revendications

1. Barre support (1) pour supporter un ou plusieurs dispositifs ou composants électriques et/ou électroniques, comprenant un profilé s'étendant longitudinalement le long d'un axe principal (X) qui, vu en coupe, comprend une partie centrale (4) reliant transversalement une première partie latérale (2) et une seconde partie latérale (3) positionnées de manière opposée l'une à l'autre sur l'un et l'autre des côtés de la partie centrale (4), ladite partie centrale (4) comprenant au moins une première rainure (15) s'étendant sur au moins une première partie de la longueur longitudinale de la barre (1), le long dudit premier axe principal (X), ladite première rainure (15) comprenant une première ouverture (200) disposée transversalement par rapport aux première et seconde parties latérales (2, 3), et une première paroi arrière (17), depuis laquelle une première paroi latérale (5) et une deuxième paroi latérale (6) s'étendent transversalement, se faisant face l'une à l'autre, lesdites première et seconde parois latérales (5, 6) étant séparées et agencées de manière à permettre que la barre (1) soit fixée à d'autres dispositifs ou composants par couplage avec un premier moyen de fixation (17, 60, 61) destiné à être inséré dans ladite première rainure, **caractérisée en ce que** :
- ladite première partie latérale (2) comprend une première partie reliée à la partie centrale (4), ainsi qu'un premier bord (7) et un deuxième bord (8) qui s'étendent transversalement depuis des extrémités opposées de ladite première partie ;
- ladite seconde partie latérale (3) comprend une seconde partie reliée à la partie centrale (4), avec un troisième bord (9) et un quatrième bord (10) s'étendant transversalement depuis des extrémités opposées de ladite seconde partie ;
lesdits premier, deuxième, troisième et quatrième bords (7, 8, 9, 10) s'étendant sur au moins une partie de la longueur longitudinale de la barre (1), le long de l'axe principal (X) et ayant des surfaces de couplage pour des dispositifs électriques et/ou électroniques.

2. Barre (1) selon la revendication 1, **caractérisée en ce qu'**au moins une partie desdites première et seconde parois latérales (5, 6) est moletée.

3. Barre (1) selon la revendication 1, **caractérisée en ce que** ladite partie centrale (4) comprend également une seconde rainure (16) s'étendant sur au moins une seconde partie de la longueur longitudinale de la barre (1), le long de l'axe principal (X), ladite seconde rainure (16) comprenant une seconde ouverture (201) disposée transversalement par rapport aux première et seconde parties latérales (2, 3), et une seconde paroi arrière (18) depuis laquelle une troisième paroi latérale (13) et une quatrième paroi latérale (14) s'étendent transversalement, se faisant face l'une à l'autre, dans laquelle lesdites troisième et quatrième parois latérales (13, 14) sont sensiblement parallèles aux première et deuxième parois latérales (5, 6), et ladite troisième paroi latérale (13) est adjacente à ladite deuxième paroi latérale (6) le long de la longueur transversale de la barre (1) par rapport à l'axe principal (X), lesdites troisième et quatrième parois latérales (13, 14) étant séparées et agencées de manière à permettre que la barre soit fixée à d'autres dispositifs ou composants par couplage avec un deuxième moyen de fixation (61) qui peut être inséré dans la seconde rainure (16).

4. Structure portante (63) pour un module de distribution électrique (50) pour systèmes basse tension, **caractérisée en ce qu'**elle comprend au moins une première barre support (1) et une seconde barre support (1) selon une ou plusieurs des revendications précédentes, et agencées à une distance l'une de l'autre, reliées transversalement par au moins une première traverse (51).

5. Structure portante (63) selon la revendication 4, **caractérisée en ce que** ladite première traverse (51) est fixée auxdites première et seconde barres support (1) en insérant un premier moyen de fixation (60) dans ladite première rainure (15) des première et seconde barres support (1).

6. Structure portante (63) selon la revendication 4, **caractérisée en ce qu'**elle comprend une seconde transverse (52) positionnée à une certaine distance de la première traverse (51), ladite seconde traverse (52) reliant transversalement lesdites première et seconde barres support (1).

7. Module de distribution électrique (50) pour systèmes basse tension, **caractérisé en ce qu'**il comprend une structure portante (63) selon la revendication 4 et au moins une barre conductrice (30) supportée par la première traverse (51), et agencée de manière sensiblement parallèle aux première et seconde barres support (1), ladite au moins une barre conductrice (30) étant destinée à distribuer de l'électricité à au moins un dispositif électrique relié fonctionnellement, directement ou indirectement, audit module de distribution électrique (50).

8. Module (50) selon la revendication 7, **caractérisé en ce que** ledit au moins un dispositif électrique est fixé directement à ladite première barre support (1) par couplage dudit premier moyen de fixation (61) à la première paroi latérale (5) et à la deuxième paroi latérale (6) de la première rainure (15).

9. Module selon la revendication 8, **caractérisé en ce que** ledit au moins un dispositif électrique comprend au moins un premier dispositif de commutation (55) avec un ou plusieurs pôles reliés électriquement à ladite au moins une barre conductrice (30).

10. Module selon la revendication 9, **caractérisé en ce que** ledit dispositif de commutation (55) est un disjoncteur à boîtier moulé.

11. Module selon la revendication 9, **caractérisé en ce qu'**une première extrémité du premier dispositif de commutation (55) est fixée à ladite première barre support (1), et la seconde extrémité, opposée à la première, est orientée vers ladite au moins une barre conductrice (30) et est couplée fonctionnellement à ladite structure portante (63).

12. Module selon la revendication 11, **caractérisé en ce qu'**il comprend au moins un second dispositif de commutation (55) avec un ou plusieurs pôles reliés électriquement à ladite au moins une barre conductrice (30), et d'une taille différente dudit au moins un premier dispositif de commutation (55), la distance (D₃) entre lesdites deuxième et troisième parois latérales (6, 13) des première et seconde rainures (15, 16) étant telle que ledit second dispositif de commutation (55) est fixé à la première barre support (1) par couplage du deuxième moyen de fixation (61) avec lesdites troisième et quatrième parois latérales (13, 14) de la seconde rainure (16).

13. Module (50) selon la revendication 9, **caractérisé en ce qu'**il comprend au moins un élément isolant (65) comprenant :
- un corps central avec une première face (150) et une seconde face (151) opposées l'une à l'autre, ladite première face (150) étant attaché à au moins une première barre conductrice (30) et une seconde barre conductrice (30), et au moins un premier connecteur électrique (64) et un second connecteur électrique (64) étant attachés à la seconde face (151) ;
- au moins une première ailette (66) s'étendant transversalement depuis la première face (150) de sorte qu'elle puisse être insérée dans l'espace entre lesdites première et seconde barres conductrices (30) ;
- au moins une seconde lame (67) s'étendant transversalement depuis la seconde face (151) de sorte qu'elle puisse être insérée dans l'espace entre lesdits premier et second connecteurs électriques (64) ;
- au moins une première fenêtre (68) et une seconde fenêtre (68) définies sur le corps central sur des côtés opposés de ladite seconde ailette (67), et faisant face auxdites première et seconde barres conductrices (30), respectivement ;
lesdits premier et second connecteurs électriques (64) étant destinés à connecter un premier pôle et un second pôle du premier dispositif de commutation (55) auxdites première et seconde barres conductrices (30), respectivement ;
lesdites première et seconde fenêtres (68) étant définies de sorte qu'un troisième moyen de fixation (36) puisse les traverser, pour fixer lesdits premier et second connecteurs électriques (64) auxdites première et seconde barres conductrices (30), respectivement.

14. Tableau de distribution (200) pour systèmes basse tension, **caractérisé en ce qu'**il comprend au moins un module de distribution (50) selon la revendication 7.
